# EUROPÄISCHE PATENTSCHRIFT

(11) **EP 0 418 727 B1**
(45) Veröffentlichungstag und Bekanntmachung des Hinweises auf die Patenterteilung: **29.12.1993**
(21) Anmeldenummer: 90117608.1
(22) Anmeldetag: 13.09.1990
(51) Int. Cl.: A01G 9/10

(54) **Pflanzbehälter**
Plant container
Conteneur de plantes

(30) Priorität: 16.09.1989 DE 3930960
(43) Veröffentlichungstag der Anmeldung: 27.03.1991
(73) Patentinhaber: Benkert, Gerhard, D-97486 Königsberg (DE)
(72) Erfinder: Benkert, Gerhard, D-97486 Königsberg (DE)
(74) Vertreter: Pöhner, Wilfried Anton, Dr.

(56) Entgegenhaltungen:
- DE-A- 3 436 530
- FR-A- 2 164 010
- FR-A- 2 237 568
- US-A- 2 939 247
- US-A- 3 958 365

## Beschreibung

Die Erfindung betrifft einen Pflanzbehälter zur Anzucht von Pflanzen insbesondere für Baumschulen und Gärtnereien, wobei das Material des Behälters Poren aufweist

Für das Züchten von Bäumen, Sträuchern, Stauden und ähnlichem bis zu einer für den Freilandeinbau geeigneten Größe, sind prinzipiell zwei Methoden denkbar:

Bei der älteren Methode wird das Zuchtgut ausgesät oder in die Erde gepflanzt und mit Erreichen einer gewissen Größe aus dem Erdreich herausgenommen und verkauft. Aufgrund des weit ausgreifenden Wurzelwachstums werden bei der Herausnahme in erheblichem Umfange und zwar idR bis zu 80 % die Wurzeln ab-getrennt, was von gravierendem Nachteil ist. So wird das Anwachsen wesentlich erschwert und die Pflanze ist erheblich geschwächt, so daß Wachstumsstörungen die Folge sind. Eine allerdings geringfügige Besserung läßt sich dadurch erreichen, wenn die Pflanze mit Erdballen entnommen wird, da die Wurzeln nicht mehr vertrocknen können und leichter anwachsen, wobei allerdings der Verlust an Wurzelmasse nicht verringert wird. Als Nachteil ist hier der Verlust an belebtem Oberboden in Baumschulen und Gärtnereien anzusehen. Ein weiterer grundsätzlicher Nachteil dieser Methode ist die Tatsache, daß die Verpflanzzeit auf Herbst und Frühjahr begrenzt ist.

Bei einer weiteren bekannten Anzuchtsmethode für Pflanzen werden Pflanzenbehälter verwendet, unter denen Töpfe, Topfplatten bis hin zum Container zu verstehen sind. Als Material finden Kunststoff oder Holz Verwendung. Mit Erreichen ihrer verkaufsfähigen Größe werden die Pflanze mit ihrem Behälter verkauft und transportiert. Hierdurch erleiden sie keinen Verpflanzungsschock. Als Nachteil dieser Methode ist anzusehen, daß sich aufgrund des beschränkt zur Verfügung stehenden Raumes Ringwurzeln ausbilden, die beim späteren Einpflanzen zur Ausbildung korkenzieherförmiger Wurzeln Anlaß geben und demzufolge eine geringe Standfestigkeit der Pflanze bedingen. Allerdings bleiben alle Wurzeln unverletzt. Als Nachteil ist anzusehen, daß bei einem zuviel an Wasser ein Abfluß nicht möglich wird, so daß bodenseitig einer Versumpfung mit der Folge der Wurzelfäulnis und der Erzeugung von Pflanzenkrankheiten Vorschub geleistet wird. Zudem sind die Wurzeln den Temperaturschwankungen nahezu unmittelbar ausgesetzt, was im Sommer leicht zum Austrocknen und im Winter zu Frostschäden führen kann. Die Fähigkeit zur Wasserspeicherung ist vergleichsweise gering, auch können derartige Behälter unter dem Einfluß von Windkräften leicht umfallen. Bei Verwendung des beliebten Materiales Kunststoff entstehen bei der Beseitigung zusätzliche Umweltprobleme.

Eine Vorrichtung gattungsgemäßer Art ist aus der US-PS 2,939,247 bekannt, die bereits die Verwendung von porösem Material zur Verwendung von Blumentöpfen, Pflanzschalen und dgl. vorsieht. Allerdings zielt die dort geschilderte Erfindung darauf ab, die Ausbildung von Kulturen an Mikroorganismen, Pilzen und dgl. innerhalb des Gefäßes und an deren Oberfläche zu verhindern. Zu diesem Zweck wird die Aufbringung eines wasserabstoßenden Materials vorgesehen. Ein Zusammenhang mit dem Wurzelwachstum ist weder erkannt noch beabsichtigt.

Hiervon ausgehend hat sich die Erfindung die Schaffung von Pflanzenbehältern zur Aufgabe gemacht, die ein Anzüchten von Pflanzen mit maximaler Fähigkeit zum Anwachsen gestattet.

Gelöst wird diese Aufgabe erfindunsgemäß dadurch, daß das Material wasserdurchlässig ist und die Poren auf der Oberfläche der Innenseite offen und in ihrem Durchmesser so groß gewählt sind, daß darin kein Wasser gespeichert wird und das Porenvolumen mindestens 30 % Volumenprozent der Wandung des Behälters beträgt.

Die Erfindung hat erkannt, daß sich ein wesentlicher Fortschritt beim Anwachsen von Pflanzen unter Verwendung von Behältern erreichen läßt, die folgende Merkmale aufweisen:

Zum einen muß der Behälter wasserdurchlässig sein, um ein Versumpfen der Pflanzen zu verhindern. Die konkrete Realisierung geschieht durch Verwendung wasserdurchlässigen Materials, damit das sich ansammelnde Wasser nach außen treten kann. Zum anderen sind Poren einzubringen, die einen Luftanteil von mindestens 30 Volumenprozent in der Wandung bedingen, sowie an der Oberfläche der Innenseite des Behälters offen sind. Bei Einwachsen der Wurzel in die von Luft erfüllte Raumelemente findet eine Unterbrechung der Versorgung mit Nährstoffen und eine Aussetzung großer Temperaturschwankungen statt. Die Folge ist ein Absterben der Wurzel in diesem Bereich und eine Verzweigung in andere Richtungen, so daß innerhalb des Behälters ein Netzwerk oder ein Filz aus Wurzeln entsteht. Die Pflanze kann ohne Probleme und ohne daß deren Wurzel hierbei verletzt werden, herausgenommen, transportiert und erneut eingepflanzt werden. Voraussetzung ist, daß sich in den von Luft erfüllten Volumenelementen (= Poren) nicht über längere Zeit Wasser speichert, da andernfalls die Wurzeln dennoch einwachsen würden. Dies wird durch die Wasserdurchlässigkeit des Materials des Behälters garantiert. Darüberhinaus ist der Durchmesser der Poren so groß einzustellen, daß aufgrund der Kapillarität kein Wasser in den Volumenelementen (= Poren) festgehalten und gespeichert wird. Wird der Durchmesser der Poren zu gering gewählt, ist zu wenig Luft vorhanden, um ein Absterben oder gar Einwachsen der Wurzeln zu bewirken. Desweiteren besitzt die Behälterwandung aufgrund des Kapillareffekts eine hohe Speicherfähigkeit für Wasser. Die unerwünschte Ausbildung der Ringwurzeln findet statt. Die Erfindung geht hier bewußt von der im Stande der Technik üblichen Zielsetzung ab, die ein hohes Speichervermögen anstrebt, um die Pflanze möglichst selten wässern zu müssen. Der Porendurchmesser ist möglichst groß zu wählen und wird einzig durch den hierbei auftretenden Verlust an mechanischer Stabilität begrenzt. Es muß garantiert sein, daß auch bei Sättigung mit Wasser der Anteil der Luft am Volumen der Wandung 30 und mehr Volumenprozent beträgt.

Im allgemeinsten Fall ist ein Luftaustausch oder eine Luftzirkulation zwischen Innen- und Außenfläche der Wandung nicht zwingend erforderlich, jedoch prinzipiell denkbar, wobei im letzteren Fall auch nach außen zu Offenporigkeit gegeben ist.

Die mit der Erfindung erreichbaren Vorteile sind in mehrfacher Hinsicht entscheidend: Im Vordergrund steht die hohe Fähigkeit zum erneuten Anwachsen der Pflanze, die daraus resultiert, daß eine Verletzung der Wurzeln beim Umtopfen nicht stattfindet. Das Ergebnis ist ein störungsfreies Anwachsen der Pflanze an ihrem neuen Standort völlig unabhängig von der Jahreszeit. Die Standfestigkeit der Pflanze wird erhöht und aufgrund der Einfachheit der Herausnahme der Pflanze kann der Behälter in der Baumschule oder Gärtnerei zurückbleiben. Durch die Möglichkeit des Abfließens von überschüssigem Wasser tritt keine Wurzelfäulnis auf und man erhält gesunde Wurzeln und folglich auch ein gesundes Wachstum. Nebem dem Erdreich besitzt der Behälter die Fähigkeit zur zusätzlichen Aufnahme und Speicherung von Wasser in den mit Luft erfüllten Volumenelementen. Gegenüber dem Freilandanbau werden zudem fast alle eingesetzten Düngemittel verbraucht. Zudem erübrigt sich die Anbringung gesonderter, der Prainage dienender Bohrungen.

Als hierfür besonders geeignete Materialien werden Blähton, Blähschiefer, Bims oder Gemische hiervon unter Beigabe von Zuschlagstoffen angesehen. Unter letzterem sind zu verstehen Zement, Kalk, Kunststoff und andere vergleichbar wirkende Bindemittel. Deren Vorteil gegenüber Kunststoff und anderen Materialien ist in ihrer hohen Standfestigkeit und ihrer umweltunproblematischen Beseitigung zu sehen, sowie ihrer Fähigkeit, im Material selbst (und nicht in den Zwischenräumen) Wasser zu speichern.

Als Alternative können geschäumte, zumindest nach innen zu offenporige Kuntstoffe eingesetzt werden. Das durch die Größe und die Anzahl der Poren gebildeten Luftvolumen reicht aus, einen Ausgleich mit der Außenumgebung herzustellen (das Material ist dann wasser- und luftdurchlässig).

In einer anderen Ausführungsform werden die Wandungen des Pflanzbehälters aus einem Geflecht hergestellt. Nach Art eines Netzes oder Siebes werden das Erdreich und die Wurzeln zurückgehalten, ein Austausch von Luft oder Wasser ist hingegen möglich.

Die im folgenden beschriebene Ausführungsform besteht aus einem doppelwandigen Behälter. Die Durchlässigkeit der Außenwand bewirkt die Möglichkeit des Austausches von Luft und Feuchtigkeit vom Zwischen- zum Außenraum hin. Die Innenwandung, an die die Pflanze bzw. das Erdreich anzuliegen kommt, ergibt aufgrund ihrer Struktur die Durchlässigkeit von Wasser und eine umgebende Luftatmosphäre, die das Wurzelwachstum nach außen zu behindert und zur Ausbildung einer netzförmigen Struktur Anlaß gibt. Ein besonderer Vorzug dieser Konstruktion ist in der vergleichsweisen hohen thermischen Isolationsfähigkeit der Doppelwandungen zu sehen.

Schließlich besteht eine andere Weiterbildung darin, den Behälter innenseitig mit einem Gewebe, Wolle, Vlies oder ähnlichem zu versehen. Diese Materialien gestatten die Durchlässigkeit sowohl von Luft als auch von Wasser.

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung erläutert wird. Sie zeigt in schematisch gehaltener Querschnittsdarstellung:
- **Figur 1**: einen doppelwandigen Pflanzbehälter,
- **Figur 2**: einen Pflanzbehälter mit einer Innenlage aus Gewebe, Wolle oder Vlies.

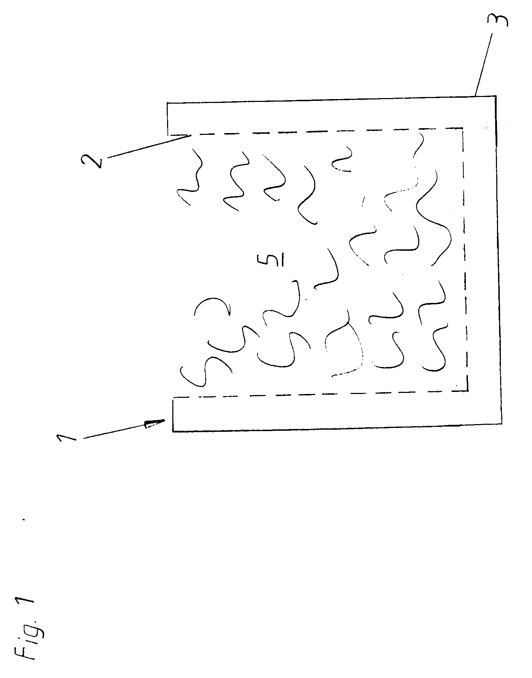

Die Wand (1) des in Figur 1 gezeigten Pflanzbehälters wird gebildet durch eine Innen- (2) und eine Außenwand (3). Die Innenwand (2) ist durchlässig und deshalb in unterbrochener Linienführung wiedergegeben. Aufgrund des Fehlens von Nährstoffen, Feuchtigkeit sowie aufgrund der Temperaturschwankungen wachsen die Wurzeln (5) der im Inneren eingesetzten Pflanze nicht weiter nach außen sondern bilden statt dessen ein Netzwerk und Geflecht, welches das problemlose Herausnehmen der Pflanze gestattet.

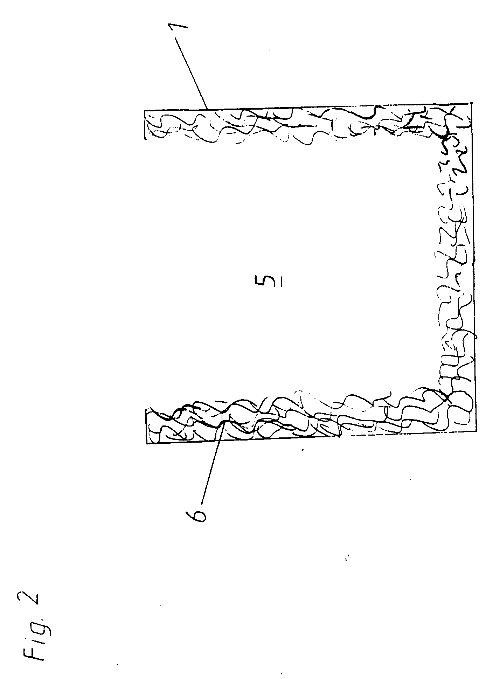

Für den in Figur 2 gezeigten Pflanzbehälter ist charakteristisch, das auf der Innenseite der Wand (1) nach Art einer Schicht aufgebrachte Gewebe, Wolle, Vlies (6). Auch sie schließen ein hohes Luftvolumen ein, die das Weiterwachsen der Wurzel nach außen zu unterbindet.

Im Ergebnis erhält man einen Pflanzbehälter, dessen Pflanze eine besonders hohe Anpflanzfähigkeit besitzt.

## Patentansprüche

1. Pflanzbehälter zur Anzucht von Pflanzen insbesondere für Baumschulen und Gärtnereien, wobei das Material des Behälters Poren aufweist, **dadurch ge****kennzeichnet,** daß das Material wasserdurchlässig ist und die Poren auf der Oberfläche der Innenseite offen sind, wobei die Poren in ihrem Durchmesser so groß gewählt sind, daß darin kein Wasser gespeichert wird und das Porenvolumen mindestens 30 % Volumenprozent der Wandung (1) des Behälters beträgt.

2. Behälter nach Anspruch 1, **dadurch gekenn****zeichnet**, daß dieser Poren mit einem durchmesser von 1-5 mm aufweist.

3. Behälter nach Anspruch 2, **dadurch gekenn****zeichnet**, daß dieser aus Blähton, Blähschiefer, Bims oder Gemischen hiervon sowie Zuschlagsstoffen besteht.

4. Behälter nach Anspruch 1 oder 2, **dadurch ge****kennzeichnet**, daß dieser aus geschäumten, nach innen zu offenporigen Kunststoff besteht.

5. Behälter nach Anspruch 2, **dadurch gekennzeichnet**, daß die Behälter wandungen (1) aus einem Geflecht bestehen.

6. Behälter nach Anspruch 2, **dadurch gekenn****zeichnet**, daß dieser doppelwandig konsipiert ist.

7. Behälter nach einem der Ansprüche 2 bis 6, **dadurch gekennzeichnet,** daß der Behälter innenseitig mit Gewebe, Wolle, Vlies (4) oder ähnlichem mit einem Luftanteil von mindestens 30 Volumenprozent ausgelegt ist.

## Claims

1. Plant container for cultivating plants especially for tree and gardening nurseries, whereby the container material has pores, **wherein** said material is permeable to water and said pores on the inside surface are open, whereby the pore diameter is selected to be so large that no water is stored therein and the pore volume is at least 30 per cent by volume of the container wall (1).

2. Container according to claim 1, **wherein** said container has pores with a diameter of 1 - 5 mm.

3. Container according to claim 2, **wherein** said container consists of bloated shale clay, bloated slate, pumice or mixtures thereof as well as aggregates.

4. Container according to claim 1 or 2, **wherein** said container consists of foamed, inward open-pore plastic.

5. Container according to claim 2, **wherein** said container walls (1) consist of a mesh.

6. Container according to claim 2, **wherein** said container is double-walled.

7. Container according to one of claims 2 to 6, **wherein** said container is lined on the inside with woven fabric, wool, non-woven fabric (4) or similar with an air proportion of at least 30 per cent by volume.

## Revendications

1. Conteneur de plantes pour la culture de plantes, en particulier pour pépinières et exploitations horticoles, le matériau du conteneur comportant des pores, **caractérisé** **en ce que** le matériau est perméable à l'eau et les pores sont ouverts à la surface de la partie intérieure, les pores ayant un diamètre choisi de taille telle que l'eau ne puisse s'y emmagasiner et le volume de pores atteignant au moins 30% en pourcentage de volume de la paroi (1) du conteneur.

2. Conteneur selon la revendication 1, **caractérisé en ce** **qu**'il comporte des pores ayant un diamètre de 1-5 mm.

3. Conteneur selon la revendication 2, **caractérisé en ce** **qu**'il est fait en argile expansée, schiste expansé, pierre ponce ou en mélanges de ceux-ci avec adjonction de matériaux d'apport.

4. Conteneur selon la revendication 1 ou 2, **caractérisé en ce** **qu**'il est fait en plastique expansé comportant des pores ouverts vers l'intérieur.

5. Conteneur selon la revendication 2, **caractérisé en ce que** les parois (1) du conteneur consistent en un tissage.

6. Conteneur selon la revendication 2, **caractérisé en ce** **qu**'il est conçu à double paroi.

7. Conteneur selon l'une des revendications 2 à 6, **caractérisé en ce que** le conteneur est recouvert à sa surface intérieure de tricot, laine, non-tissé (4) ou similaire avec un quotient en air d'au moins 30 pour-cent en volume.
